# EUROPEAN PATENT APPLICATION

(11) **EP 1 380 990 A1**
(43) Date of publication of application: **14.01.2004**
(21) Application number: 02291732.2
(22) Date of filing: 09.07.2002
(51) Int. Cl.: G06K 19/08

(54) **Data carrier being removably mounted on other data carrier of different type**

(71) Applicant: SCHLUMBERGER Systèmes, 92120 Montrouge (FR)
(72) Inventor: Leibenguth, Joseph, 92210 Saint-Cloud (FR); Perben, Cedric, 45100 Orlèans (FR); El Yamani, Hayat, 94230 Cachan (FR); Ponsan, Véronique, 45000 Orléans (FR)

(57) **Abstract**

A system comprises a first data carrier (MOD) and a second data carrier (CDC). The first data carrier (MOD) is inserted in the second data carrier (CDC). The system is characterized in that, the first data carrier (MOD) is removable from the second data carrier (CDC), in that the first data carrier (MOD) is readable by a first reading machine, and in that the second data carrier (CDC) is readable by a second reading machine, which is different than the first reading machine.

## Description

### FIELD OF THE INVENTION

The invention concerns a system comprising a first data carrier and a second data carrier. The first data carrier is inserted in the second data carrier. The first data carrier may be, for example, a GSM plug. The second data carrier may be, for example, an optical data carrier.

### BACKGROUND OF THE INVENTION

A prior art method of manufacturing a data carrier in the ISO format made of polycarbonate comprises the following steps.
In a moulding step a CD made of polycarbonate is moulded. The CD is 1.2 mm thick to meet the CD standards requirements. In a depositing step a round shaped metallic layer is deposited on the CD to define an optical data storage area. In a cutting step, the CD is cut so as to define a CD Card in the ISO format. In a first pre-cutting step, a breaking line is pre-cut so as to both locally weaken the CD card and separate the optical data storage area, optical part, from the rest of the CD card, rest part. In a second pre-cutting step, the outline of a GSM plug is precut in the rest part. In a thinning step, the rest part is thinned from 1.2 mm to 0.8 mm, to meet the GSM requirements. In a milling step, a cavity is milled inside the precut outline of the GSM plug. In an embedding step, an integrated circuit is embedded in the cavity using a glue developed specially for this purpose. In a personalization step, the integrated circuit is electrically connected to contact pads flush with the surface of the GSM plug and graphical elements are put in the CD card.

### SUMMARY OF THE INVENTION

It is an object of the invention to allow a reduction of the cost.

According to an aspect of the invention, a system comprising a first data carrier and a second data carrier, the first data carrier being inserted in the second data carrier, the system being characterized in that, the first data carrier is removable from the second data carrier, in that the first data carrier is readable by a first reading machine, and in that the second data carrier is readable by a second reading machine, which is different than the first reading machine.

The first data carrier can be, for example, a GSM plug. The second data carrier can be, for example an optical data carrier. The manufacturing of the optical data carrier and the manufacturing of the GSM plug can be done independently and simultaneously. Consequently, the invention allows a cost reduction.

These and other aspects of the invention will be described in greater detail hereinafter with reference to drawings.

### BRIEF DESCRIPTION OF THE DRAWINGS

- Figure 1 illustrates the different steps of the manufacturing method according to the invention;
- Figure 2 illustrates the inserting step, in which a low tack adhesive is used to fix the GSM plug;
- Figure 3 illustrates the use of a clipping technique to fix the GSM plug in the cavity in a removable manner;
- Figure 4 illustrates the use of a soldering technique to fix the GSM plug in the cavity in a removable manner;
- Figure 5 illustrates the use of a geometrical wedging technique to fix the GSM plug in the cavity in a removable manner;
- Figure 6 illustrates the use of a sliding technique to fix the GSM plug in the cavity in a removable manner;
- Figure 7 illustrates the use of a sliding technique to fix the GSM plug in the cavity in a removable manner;
- Figure 8 illustrates the use of a hole to facilitate the removing of the plug, for example, by finger pressure;
- Figure 9 illustrates a combination of different fixing techniques;
- Figure 10 and 11 illustrates various position of the GSM plug.

### DETAILED DESCRIPTION

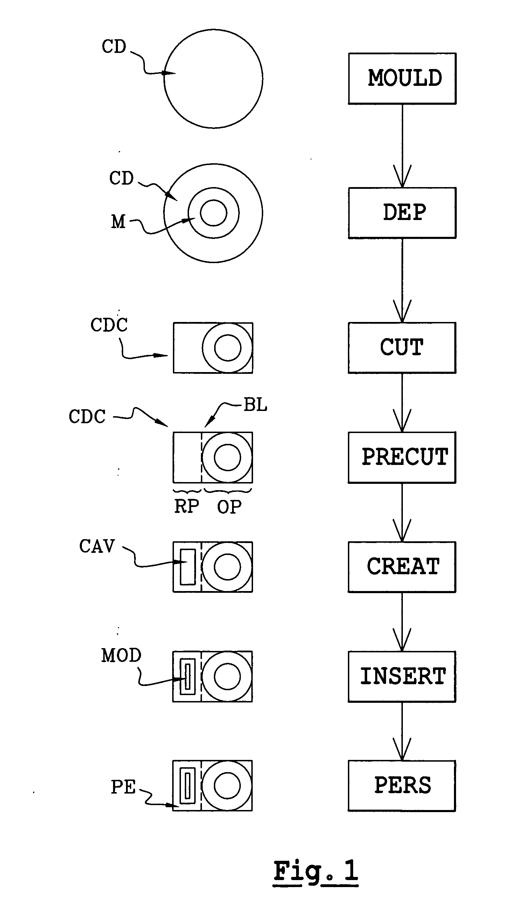

FIG. 1 illustrates the different steps of the method according to the invention.

In a moulding step MOULD, a CD is moulded. The mould can be, for example, a master CD made of glass, in which polycarbonate is injected.

In a depositing step DEP, a round-shaped metallic layer M is deposited on the moulded CD to define an optical data storage area. Advantageously, a varnish protective layer can be deposited on the round-shaped metallic layer. The round-shaped metallic layer is preferably centred on the CD.

In a cutting step CUT, the moulded CD is cut in the form of an ISO card CDC.

In an optional pre-cutting step PRECUT which is followed by the cutting step CUT, a breaking line BL is pre-cut so as to both locally weaken the CD card CDC and separate the optical data storage area, optical part OP, from the rest of the CD card, rest part RP.

In a creating step CREAT, a cavity CAV is created in the rest part RP. To that end, milling techniques can, for example, be used.

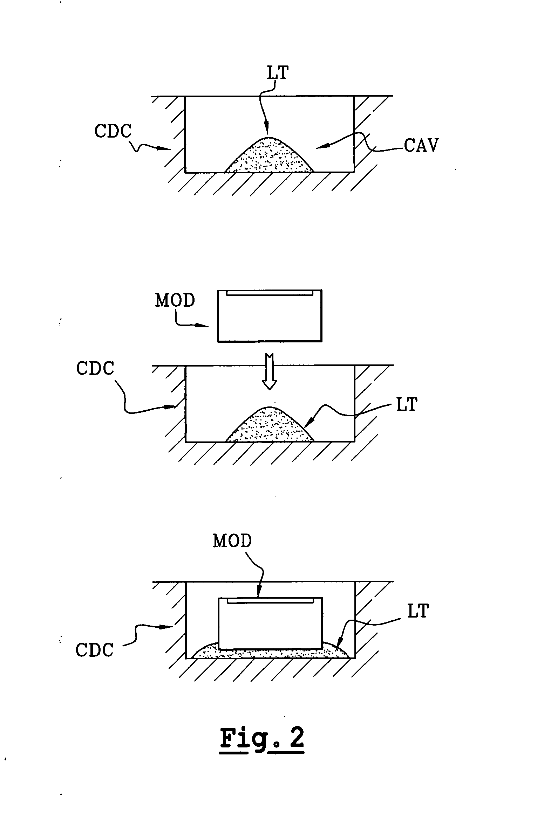

In an inserting step INSERT, an already manufactured GSM plug MOD is inserted in the cavity. The GSM plug MOD comprises a plastic body and integrated circuit electrically connected to contact pads flush with the surface of the plastic body. The plastic body is, for example, modified ABS, moulded ABS or PVC. As illustrated in fig. 2, the GSM plug MOD is fixed in the cavity CAV using a low tack adhesive LT. Thus, the GSM plug MOD can be easily removed from the cavity CAV. Contrary to the prior art, the GSM plug can be manufactured with conventional material independently and simultaneously. So the manufacturing is faster. Further when creating a GSM plug MOD in a CD card of polycarbonate, the quality is lower because polycarbonate is not easy to manufacture. In addition we have to stick the module in the polycarbonate. To that end, a specific glue has to be developed. Thus, the invention allows an enhanced quality and a cost reduction.

In a personalization step PERS graphical elements PE are put on the CD card.

The description hereinbefore illustrates the following features:
A system comprises a first data carrier (MOD) and a second data carrier (CDC). The first data carrier (MOD) is inserted in the second data carrier (CDC). The system is characterized in that, the first data carrier (MOD) is removable from the second data carrier (CDC),
in that the first data carrier (MOD) is readable by a first reading machine, and in that the second data carrier (CDC) is readable by a second reading machine, which is different than the first reading machine.

The description of the above mentioned embodiment illustrates rather than limits the invention. It will be evident that there are numerous alternatives, which fall within the scope of the appended claims. In this respect, the following closing remarks are made.

The second data carrier can be, for example, an optical data carrier and more generally any other data carrier that is readable via a reading machine that is different than that of the first data carrier, for example, a magnetic data carrier.

The cutting step CUT, the pre-cutting step PRECUT, and the creating step CREAT could also be replaced by the moulding step MOULD using an appropriate mould.

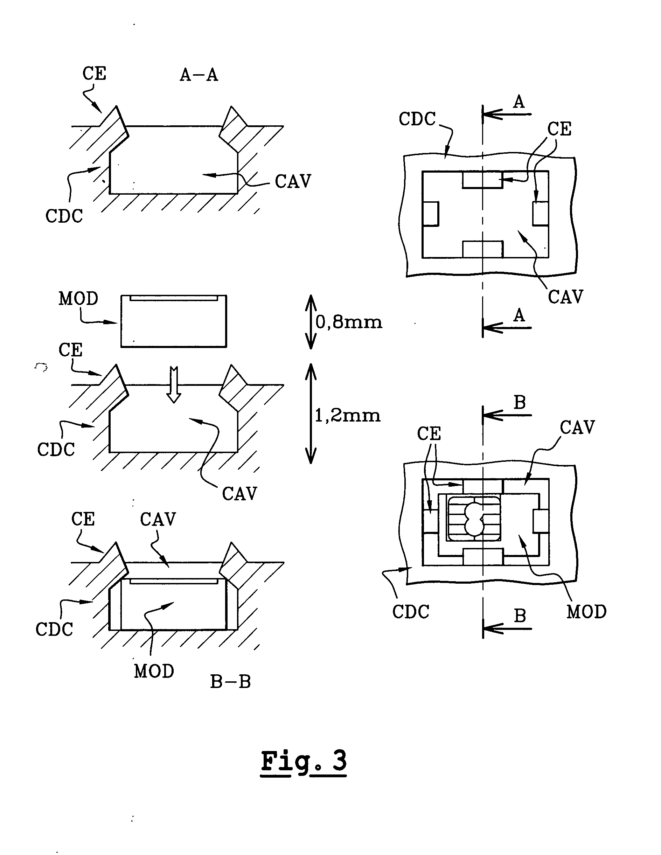

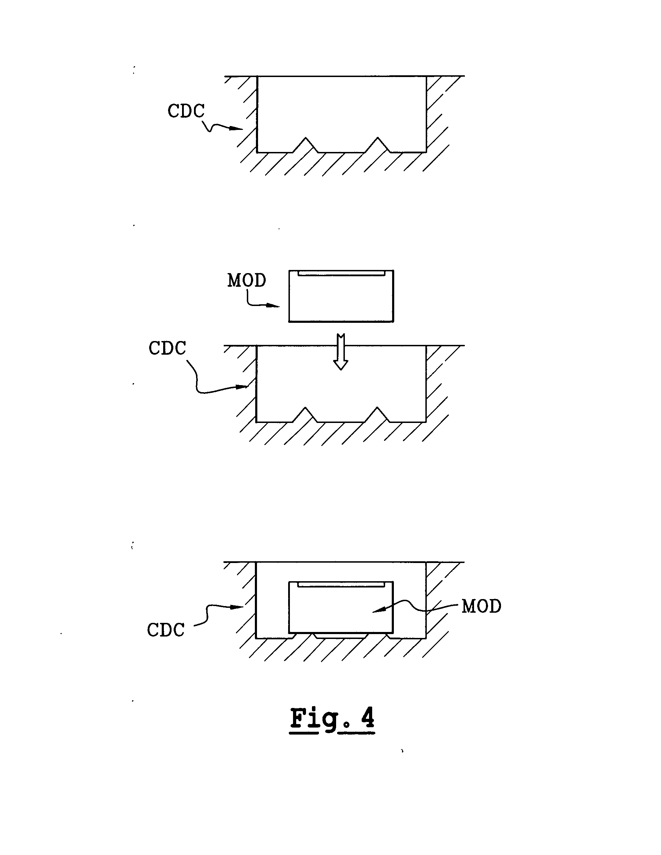

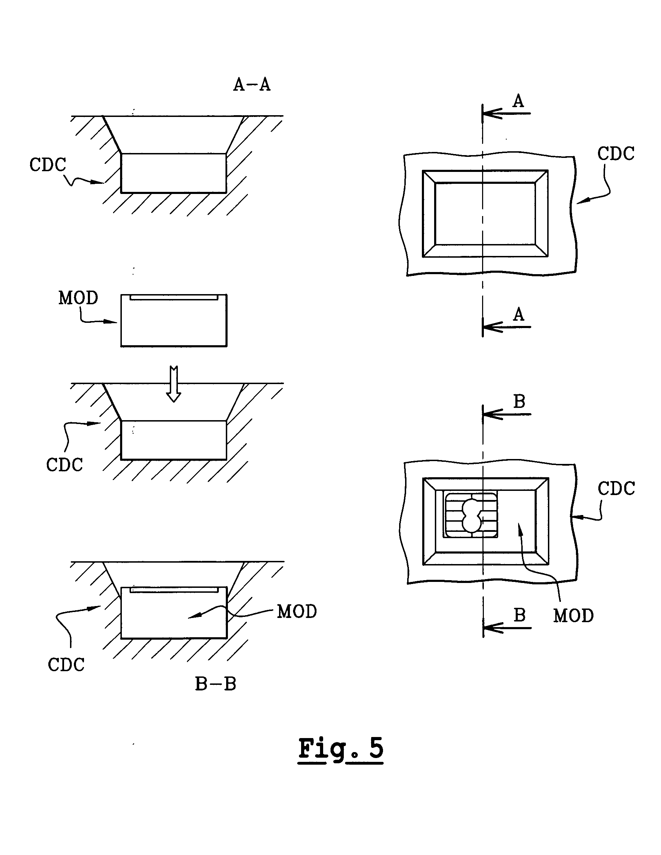

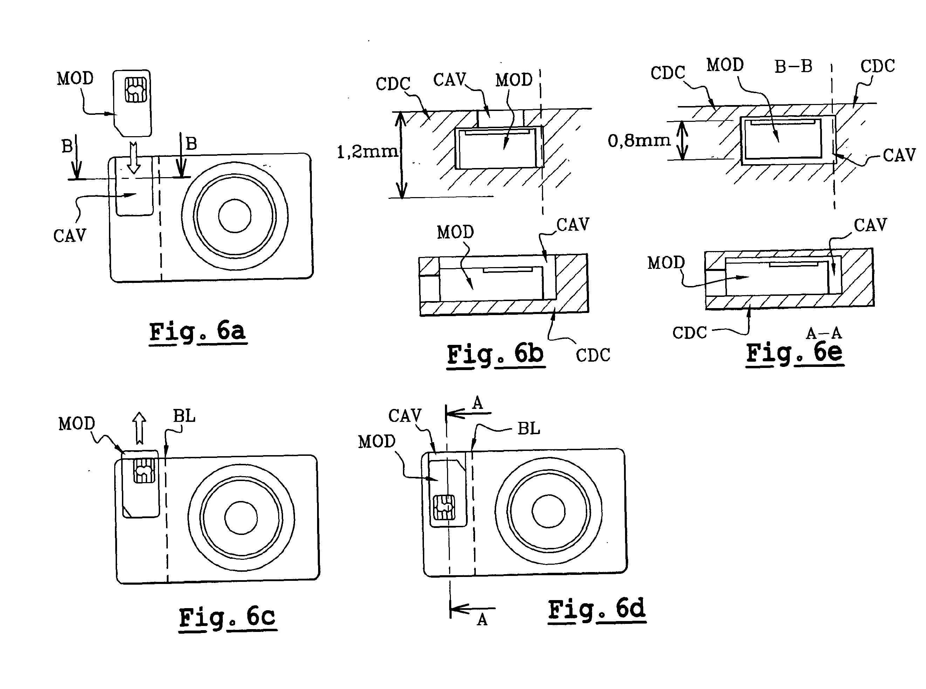

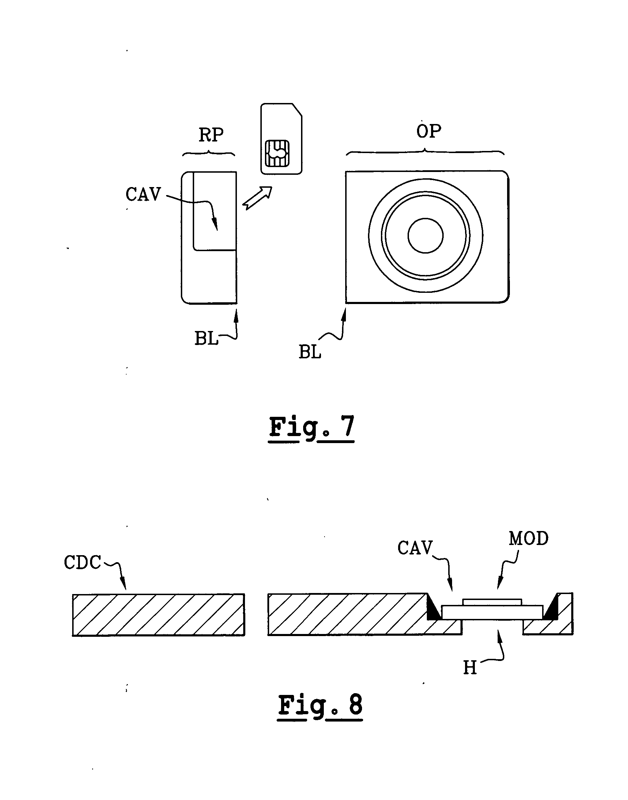

In the inserting step INSERT, the GSM plug MOD has been inserted in the cavity CAV using a low tack adhesive LT. Other techniques can also be used to fix the GSM plug MOD in the cavity CAV.
As illustrated in fig. 3 to fig. 5 the GSM plug MOD can be fixed by driving in techniques, for example, as illustrated in fig. 3, clipping techniques. The clipping elements CE can be moulded in the moulding step MOULD.
As illustrated in fig. 4, soldering techniques can also be used. It can be, for example, hot soldering or ultrasound soldering.
As showed by fig.5, geometrical wedging techniques can be also used. To this purpose grooves or bevelled edges can be, for example, used.
As illustrated in fig. 6, the GSM plug MOD can also be fixed using sliding techniques.
As illustrated in fig. 6 a through d, the plug can be inserted in the CD card in a visible manner. As illustrated in Fig. 6e, the plug can also be inserted in the CD card CDC in a non-visible manner.
Alternatively, as illustrated in fig. 6d and 7, one of the edges of the GSM plug MOD can touch the breaking line BL, so that the rest part RP has to be break to remove the plug MOD from the cavity CAV. This technique can be used, for example, as a fraud detector.

As illustrated in Fig. 8 a hole H can be provided in the cavity CAV so that the GSM plug can be easily removed from the CD card CDC, for example, by finger pressure. Instead of using a hole H for facilitating the removing of the GSM plug, a notch, pre-cut lines or a groove can also be used.

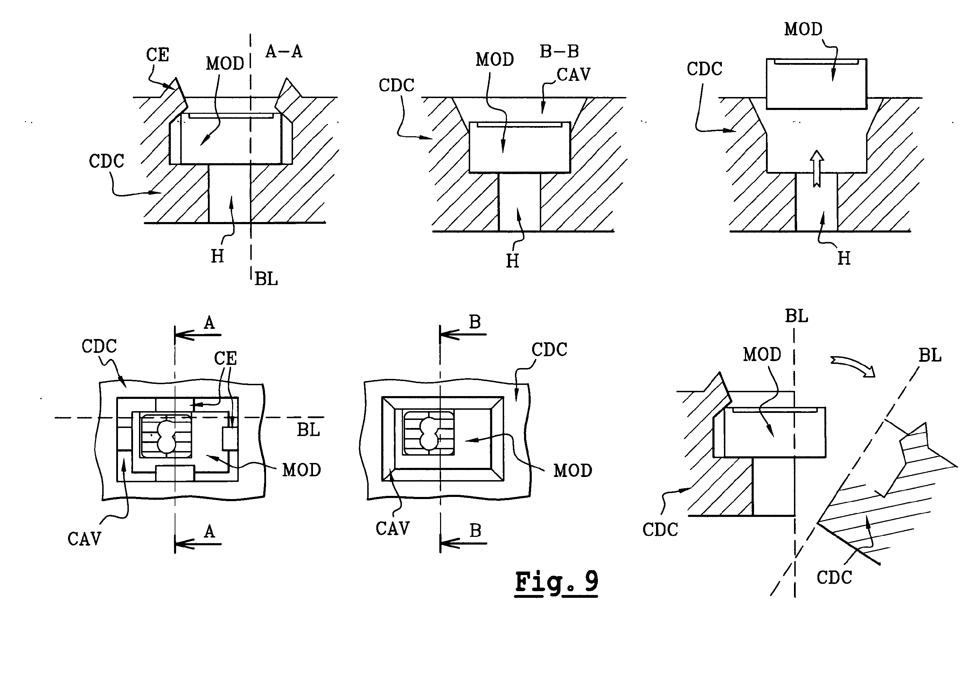

As illustrated in Fig. 9, combining the above-mentioned techniques (i.e. clipping, soldering geometrical wedging, sliding in techniques...) can also be used to both fix and enable the easy removing of the GSM plug MOD.

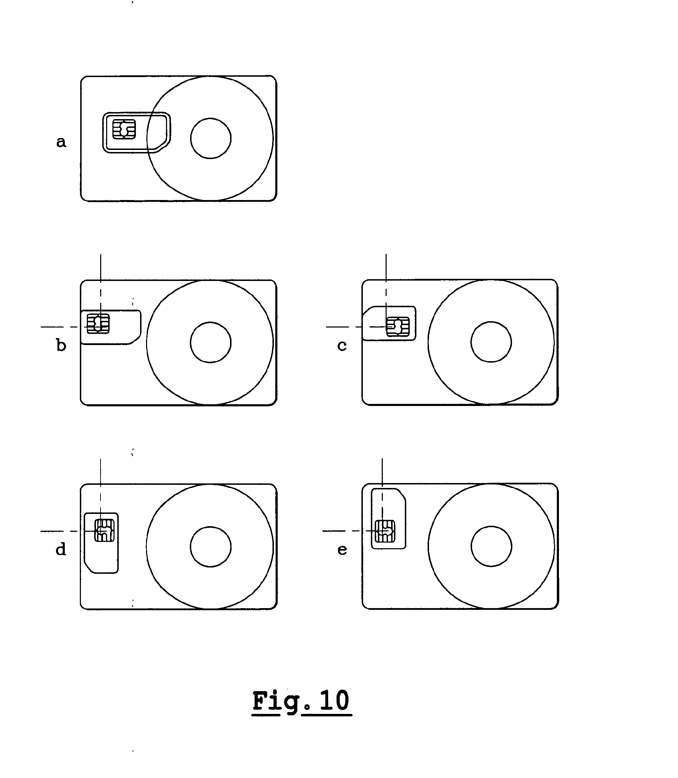

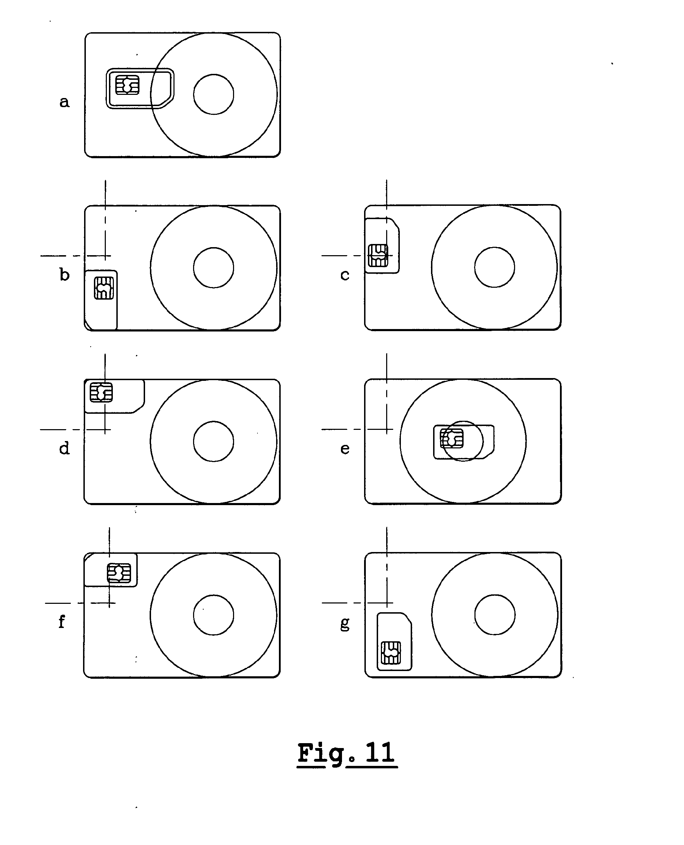

As illustrated in Fig. 10a and fig. 11a if the GSM plug is in the ISO position, a relatively small portion of the card can be used for optical storage.
As illustrated in Fig. 10b to 10e and in Fig. 11 b to g, there are other possibilities to position the GSM plug in such a manner that the useful optical storage area is bigger. As illustrated in Fig. 10b the GSM plus is transferred from the ISO position to the left. As illustrated in Fig. 10 c, the GSM plus is translated from the ISO position to the left and rotated 180 degrees. As illustrated in Fig. 10d, the GSM plug is rotated 270 degrees from the ISO position. As illustrated in Fig. 10e the GSM plug is rotated 90 degrees from the ISO position. Other positions are shown in Fig. 11b to 11g.

## Claims

1. A system comprising a first data carrier (MOD) and a second data carrier (CDC), the first data carrier (MOD) being inserted in the second data carrier (CDC), the system being **characterized in that**, the first data carrier (MOD) is removable from the second data carrier (CDC), **in that** the first data carrier (MOD) is readable by a first reading machine, and **in that** the second data carrier (CDC) is readable by a second reading machine, which is different than the first reading machine.

2. The system according to claim 1, **characterized in that** the first data carrier (MOD) is a GSM plug (MOD) and **in that** the second data carrier is an optical data carrier (CDC).

3. The system according to claim 1, **characterized in that** the first data carrier (MOD) is inserted in the second data carrier (CDC) using clipping elements.

4. The system according to claim 1, **characterized in that** the first data carrier (CDC) is inserted in the second data carrier using sliding techniques.

5. The system according to claim 2, **characterized in that** one edge of the GSM plug MOD touch a breaking line of the optical data carrier (CDC).
